(19) Europäisches Patentamt
European Patent Office
Office européen des brevets

(11) Publication number: **0 050 953**
**B1**

(12) **EUROPEAN PATENT SPECIFICATION**

(45) Date of publication of patent specification: **30.03.88**

(51) Int. Cl.$^4$: **F 23 N 5/08,** G 08 B 17/12

(21) Application number: **81304881.6**

(22) Date of filing: **20.10.81**

(54) **Flame detection circuit.**

(30) Priority: **23.10.80 US 199898**

(43) Date of publication of application:
**05.05.82 Bulletin 82/18**

(45) Publication of the grant of the patent:
**30.03.88 Bulletin 88/13**

(84) Designated Contracting States:
**CH DE FR GB IT LI NL**

(56) References cited:
**GB-A-1 096 992**
**US-A-4 016 424**
**US-A-4 029 966**

(73) Proprietor: **HONEYWELL INC.**
**Honeywell Plaza**
**Minneapolis Minnesota 55408 (US)**

(72) Inventor: **Landis, William R.**
**2809 West 97th Street**
**Bloomington Minnesota 55431 (US)**

(74) Representative: **Frohwitter, Bernhard, Dipl.-Ing. et al**
**Bardehle-Pagenberg-Dost-Altenburg & Partner**
**Patent- und Rechtsanwälte Galileiplatz 1**
**Postfach 86 06 20**
**8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 050 953 B1

**Description**

Ultraviolet type flame detection equipment has been used for many years in various applications. One widely used application is in the detection of a flame in a burner with the detection equipment insuring proper and safe operation of the burner equipment. Ultraviolet flame detection equipment typically relies on a gas filled tube that has a voltage applied across the tube. In the presence of an ultraviolet source, the tube becomes conductive and allows current to be conducted. Circuits of this type typically use an ultraviolet responsive tube that is allowed to conduct, and is then quenched by the application of an AC voltage.

Circuits of this type are liable to suffer from a type of fault which may be briefly described as a short circuit of the ultraviolet responsive tube. Such a fault is due more precisely to an insulation failure or leakage of water, affecting the leads of the tube. Also, such a fault is more exactly a fault producing an appreciable resistance across the leads of the tube; that is, it is not usually a true short circuit in the sense of having negligible resistance.

GB—A—1 096 992 shows a circuit in which this type of fault is discussed and provided for. In fact, this circuit relies essentially on a level discrimination, with the fault current due to such a short circuit being less than the current due to the conduction of the tube in response to a flame. It is evident that this circuit is only immune to short circuits with a resistance higher than the resistance of the tube when conductive.

Another design of circuit intended to guard against responding to such a fault has been designed so that a short circuit of the tube causes an output signal which is not responded to in the same way as a tube response to the presence of an ultraviolet source, such as a flame. Typically a short circuit causes equal conduction in both directions of an alternating current while the ultraviolet responsive tube normally conducts only during all or part of one half of the cycle of the applied AC voltage.

Although this circuit is generally satisfactory, it has been found that there is a range of resistances for the short circuit which it does not cope with successfully. This range is in the region of 7 000 to 60 000 ohms. Although faults in this range are rare, the possibility of this type of failure is highly undesirable.

Accordingly, the object of the present invention is to provide a circuit with an improved method of guarding against short circuit failures.

Accordingly, the present invention provides a flame detection circuit comprising a phototube responsive to UV light from a flame, connected in an AC-powered input circuit including a series resistor-capacitor circuit to cyclically charge and discharge the capacitor when the tube senses a flame, the input circuit having an output connected to the series resistor-capacitor circuit, and an integrator which is fed from said output to integrate the signal thereon and which feeds an amplifier which thereby energizes a relay in response to the presence of a flame, characterized in that the phototube conducts with a characteristic sharp initial increase of current when a flame is present, and further characterized by a pulse responsive circuit, connected to the input circuit and including a normally conductive switch connected to the amplifier input to short circuit the input to the amplifier, the pulse responsive circuit being responsive to said sharp initial increases of current to turn off the normally conductive switch.

An embodiment of the invention will now be described by way of example only with reference to the accompanying drawings, in which:—

Figure 1 is a schematic diagram of a flame detection circuit means connected to an ultraviolet responsive tube;

Figure 2 is a wave form of time (T) versus current (C) in a resistor in the circuit of Figure 1, and;

Figure 3 is a wave shape of the current (C) versus time (T) when a proper current wave form is present.

Referring to Figure 1, there is disclosed a flame detection circuit 10 including an ultraviolet responsive tube 11 that is positioned to detect a flame. The circuit disclosed typically would be used in a burner control system for safe operation of a burner. The present circuit could also be used for use with uncontrolled fires, such as fire alarm and control systems.

The ultraviolet responsive tube 11 is connected to an input circuit 12 having a pair of terminals 13 and 14 connected to the ultraviolet tube 11 with the input circuit 12 powered by an alternating current potential source 15. This source typically would be a 60 hertz source of voltage suitable to function with the particular tube 11. The input circuit 12 further includes a parallel combination of a resistor 16 and a capacitor 17 that are in turn connected by conductor 20 to a parallel combination of a diode 21 and a second capacitor 22 are connected to the potential source 15 and to a conductor 23 that forms a common or ground for the overall circuit. The tube 11 is in series with a resistor 24. The capacitors 22 and 17 along with the resistances 16, 24 and the diode 21 form a series circuit which provides for a cyclic charging and discharging of the capacitors. The charging and discharging of the capacitors varies dependent on the state of conduction of the tube 11 and will be discussed subsequently.

A diode 25 is connected to a resistor 26 that is paralleled by a capacitor 27 with the diode 25 connected to the input circuit 12. The parallel combination of the resistor 26 and the capacitor 27 act as an integrator. The integrator made up of the resistor 26 and the capacitor 27 has a conductor 30 at which point a signal voltage is developed dependent on the state of conduction of the tube 11. The signal voltage on conductor 30 is fed through a resistor 31 to a further conductor 32. The conductor 32 is connected to a resistor 33 and a flame current meter jack 29 along with a capacitor 34, which are in parallel, to the common conductor 23. The parallel combination of the resistor 33 (including jack 29) and the capacitor 34 is connected through a further resistor 35 to a diode 36 that forms an input to a three stage transistor amplifier 40. The output of the transistor amplifier or flame amplifier 40 is a transistor 41 that is connected in series with a relay 42. The relay that is connected between a supply conductor 43 and the transistor 41 which in turn is connected to the ground conductor 23. The conduction of the transistor 41 in response to a signal across the diode 36 controls the pull in and drop out of a switch of relay 42 provided the conductor 43 is energized from a source, such as a direct current potential 44 that has been shown as a conventional battery. In reality the source 44 would be a potential developed through rectification and voltage regulation from an alternating current source that can be common to source 15.

To this point, the circuit described is the type of circuit mentioned in the Background of the Invention as an ultra-violet responsive tube flame detection circuit means that is not protected from the inadvertent presence of a low resistance across the terminals 13 and 14. To make the flame detection circuit immune from resistance shorts across the terminals 13 and 14, a pulse responsive circuit 50 is provided that includes a transistor 51 that is connected from the conductor 43 through a diode 52 to a junction point 53 of a resistor 54 and a capacitor 55. The junction point 53 is connected to a gate 56 of a field effect transistor 60 which contains a source and a drain connected so that the field effect transistor 60 short circuits the resistor 33. This short circuit eliminates the signal voltage present on the conductor 32 unless the field effect transistor 60 can be driven out of conduction by a voltage at 53 on its gate 56. This requires the presence of a charge on the capacitor 55 which is provided when the transistor 51 properly conducts through the diode 52.

The transistor 51 has its base connected by a resistor 61 to the source voltage on conductor 43 and the resistor 61 is paralleled by a diode 62. The diode 62 is connected through a capacitor 63 via a conductor 64 to a junction 65. The voltage at junction 65 is the voltage that is generated across the resistor 24 and is indicative of the state of conduction of the tube 11. This will be brought out in the description below in connection with Figures 2 and 3. The circuit is completed by connecting a resistor 66 to amplifier 40 through conductor 67 along with conductor 68 to a further direct current potential 70. This provides a negative bias on amplifier 40 that must be overcome by the flame signal current to switch the relay 42.

If it is first assumed that there is no flame present, the application of voltage to the present circuit does not allow for the relay 42 to become conductive. With no flame present, the tube 11 is a substantially open circuit and therefore the input circuit 12 does not provide a source of potential across the resistor 24. There is a voltage developed across the capacitor 63 which is developed by the direct current potential source 44 charging the capacitor 63 through the resistor 61 and back through the resistor 24. With the tube 11 in a nonconductive state, there is no signal on the conductor 30, but even if there were, the field effect transistor 60, being in a conductive state, would short that signal out.

In the event that a flame is positioned to cause the tube 11 to conduct, the conduction of that tube would generate a current in the resistor 24 as is shown in Figure 2. A current does not occur during the positive half of the applied wave form generated by the source 15, nor does it occur until the tube 11 is supplied with a sufficiently negative potential across the terminals 13 and 14 for the tube to breakdown and suddenly conduct. This is shown by the sharp change in current at time 70. The current then continues to conduct at 71 until the current reaches the zero line at which time the tube 11 is caused to become nonconductive by the normal configuration of its connection in the input circuit 12. The sudden conduction of current in resistor 24 at time 70 changes the voltage that has been built up across the capacitor 63 and this sudden change in voltage at the capacitor 63 causes the transistor 51 to be suddenly driven into conduction. The sudden conduction of transistor 51 provides the pulse or current as disclosed at 72 (of Figure 3) to the junction 53 of the capacitor 55 and the gate 56 of the field effect transistor 60. The circuit is designed so that a small number of pulses are required to raise the voltage across capacitor 55 at the gate 56 of the field effect transistor 60 to turn the transistor 60 "off". At this same period of time the pulses of "on" and "off" being generated are being supplied at the output diode 25 as an input or signal voltage on conductor 30 to charge the capacitor 27 which forms the control signal for the transistor amplifier 40. It is obvious that when a voltage is provided on the conductor 30 and the field effect transistor 60 is driven out of conduction, that the voltage on conductor 30 then becomes a driving signal for the transistor amplifier 40 which in turn turns "on" the transistor 41 to pull in the relay 42 indicating the presence of a flame at the tube 11 as soon as the negative bias set through a resistor 66 has been overcome.

It will be understood that the wave forms disclosed in Figures 2 and 3 must occur for a repetitive number of cycles in order to charge the capacitors 27 and 55 to provide an appropriate signal to the transistor amplifier 40 to energize the outplay relay 42. This eliminates the possibility of a transient or stray type of signal accidentally energizing the control relay 42.

If the circuit is considered with a resistance across the terminals 13 and 14, it will be found that the signal that appears across the resistor 24 is that disclosed in Figure 2 at 73. In this case the sharp leading edge is not present, and the necessary pulse of current 72 (disclosed in Figure 3) is now allowed to pass by the transistor 51. The presence of a resistance across the terminals 13 and 14 of the present circuit therefore is properly detected and rejected as an unsafe condition without pulling in the control relay 42 as had occurred in the circuit prior to the addition of the present circuit.

**Claims**

1. A flame detection circuit comprising a phototube (11) responsive to UV light from a flame, connected in an AC-powered input circuit (12) including a series resistor-capacitor circuit (16, 17, 22, 24) to cyclically charge and discharge the capacitor (17, 22) when the tube senses a flame, the input circuit having an output connected to the series resistor-capacitor circuit, and an integrator (26, 27) which is fed from said output to integrate the signal thereon and which feeds an amplifier (40) which thereby energizes a relay (42) in response to the presence of a flame, characterized in that the phototube conducts with a characteristic sharp initial increase of current (Fig. 2) when a flame is present, and further characterized by a pulse responsive circuit (50), connected to the input circuit and including a normally conductive switch (60) connected to the amplifier (40) input to short circuit the input to the amplifier, the pulse responsive circuit being responsive to said sharp initial increases of current to turn off the normally conductive switch.

2. A flame detection circuit according to claim 1, characterized in that the pulse responsive circuit switch is a field effect transistor (60) having its source and drain connected to short circuit the input to the amplifier.

3. A flame detection circuit according to claim 2, characterized in that the pulse responsive circuit includes a further transistor (51) connected in series with a capacitor (55) and coupled to the gate (56) of the field effect transistor, the further transistor switching in response to the tube conducting in the presence of a flame to provide a charge on the capacitor (55) to turn the field effect transistor off.

4. A flame detection circuit according to claim 3, characterized in that the further transistor (51) has its base electrode coupled to the input circuit by a further capacitor (63).

**Patentansprüche**

1. Flammendetektorschaltkreis mit einem auf UV-Licht aus einer Flamme reagierenden Fotoelement (11), das in einen mit Wechselstrom betriebenen, einen Serien-Widerstands-Kondensator-Schaltkreis (16, 17, 22, 24) umfassenden Eingangsschaltkreis (12) eingeschaltet ist, der — wenn das Fotoelement eine Flamme aufspürt — den Kondensator (17, 22) zyklisch auf- und entlädt und der einen mit dem Serien-Widerstands-Kondensator-Schaltkreis verbundenen Ausgang aufweist, und mit einem von diesem Ausgang gespeisten Integrator (26, 27) zur Signalintegration, der einen Verstärker (40) speist, welcher als Reaktion auf das Vorhandensein einer Flamme ein Relais (42) erregt, dadurch gekennzeichnet, daß das Fotoelement beim Vorhandensein einer Flamme Strom mit einer charakteristischen steilen anfänglichen Zunahme (Fig. 2) leitet, daß ferner ein mit dem Eingangsschaltkreis verbundener, auf Stromimpulse ansprechender Schaltkreis (50) vorgesehen ist, der einen normalerweise leitenden Schalter (60) umfaßt, der mit dem Eingang des Verstärkers (40), um diesen Eingang kurzzuschließen, verbunden ist, wobei der auf Stromimpulse ansprechende Schaltkreis auf die anfänglichen Stromzunahmen in der Weise reagiert, daß er den normalerweise leitenden Schalter abschaltet.

2. Flammendetektorschaltkreis nach Anspruch 1, dadurch gekennzeichnet, daß der in dem auf Stromimpulse ansprechenden Schaltkreis vorgesehene, normalerweise leitende Schalter ein Feldeffekttransistor (60) ist, dessen Quelle (source) und Abfluß (drain) so geschaltet sind, daß sie den Eingang zum Verstärker kurzzuschließen vermögen.

3. Flammendetektorschaltkreis nach Anspruch 2, dadurch gekennzeichnet, daß der auf Stromimpulse ansprechende Schaltkreis einen weiteren Transistor (51) umfaßt, der mit einem an das Gatter (gate) (56) des Feldeffekttransistors angeschlossenen Kondensator (55) in Serie geschaltet ist, wobei dieser weitere Transistor in Abhängigkeit vom stromführenden Fotoelement beim Vorhandensein einer Flamme schaltet, um den Kondensator (55) aufzuladen und den Feldeffekttransistor abzuschalten.

4. Flammendetektorschaltkreis nach Anspruch 3, dadurch gekennzeichnet, daß die Basiselektrode des genannten weiteren Transistors (51) über einen weiteren Kondensator (63) an den Eingangsschaltkreis angeschlossen ist.

**Revendications**

1. Circuit de détection de flamme comprenant un phototube (11) agissant en réponse à de la lumière UV en provenance d'une flamme, connecté dans un circuit d'entrée alimenté en alternatif (12) comprenant un circuit série résistance-condensateur (16, 17, 22, 24) pour charger et décharger cycliquement le condensateur (17, 22) quand le tube détecte une flamme, le circuit d'entrée comprenant une sortie connectée au circuit série à résistance-condensateur, et un intégrateur (26, 27) qui est alimenté à partir de ladite sortie pour intégrer le signal qu'il reçoit et qui alimente un amplificateur (40) qui excite ainsi un relais (42) en réponse à la présence d'une flamme, caractérisé en ce que le photo-tube conduit avec une augmentation initiale abrupte de sa caractéristique en courant (figure 2) quand une flamme est présente, et caractérisé en outre par un circuit (50) sensible à une impulsion connecté au circuit d'entrée et comprenant un commutateur normalement conducteur (60) connecté à l'entrée de l'amplificateur (40) pour court-circuiter l'entrée de l'amplificateur, le circuit sensible à une impulsion étant sensible aux augmentations initiales abruptes du courant pour couper le commutateur normalement conducteur.

2. Circuit de détection de flamme selon la revendication 1, caractérisé en ce que le commutateur du circuit sensible à une impulsion est un transistor à effet de champ (60) dont la source et le drain sont connectés pour court-circuiter l'entrée de l'amplificateur.

3. Circuit de détection de flamme selon la revendication 2, caractérisé en ce que le circuit sensible à une impulsion comprend un autre transistor (51) connecté en série avec un condensateur (55) et couplé à la grille (56) d'un transistor à effet de champ, l'autre transistor commutant en réponse au fait que le tube conduit en présence d'un flamme pour fournir une charge sur le condensateur (55) pour couper le transistor à effet de champ.

4. Circuit de détection de flamme selon la revendication 3, caractérisé en ce que l'autre transistor (51) a son électrode de base couplée au circuit d'entrée par un autre condensateur (63).

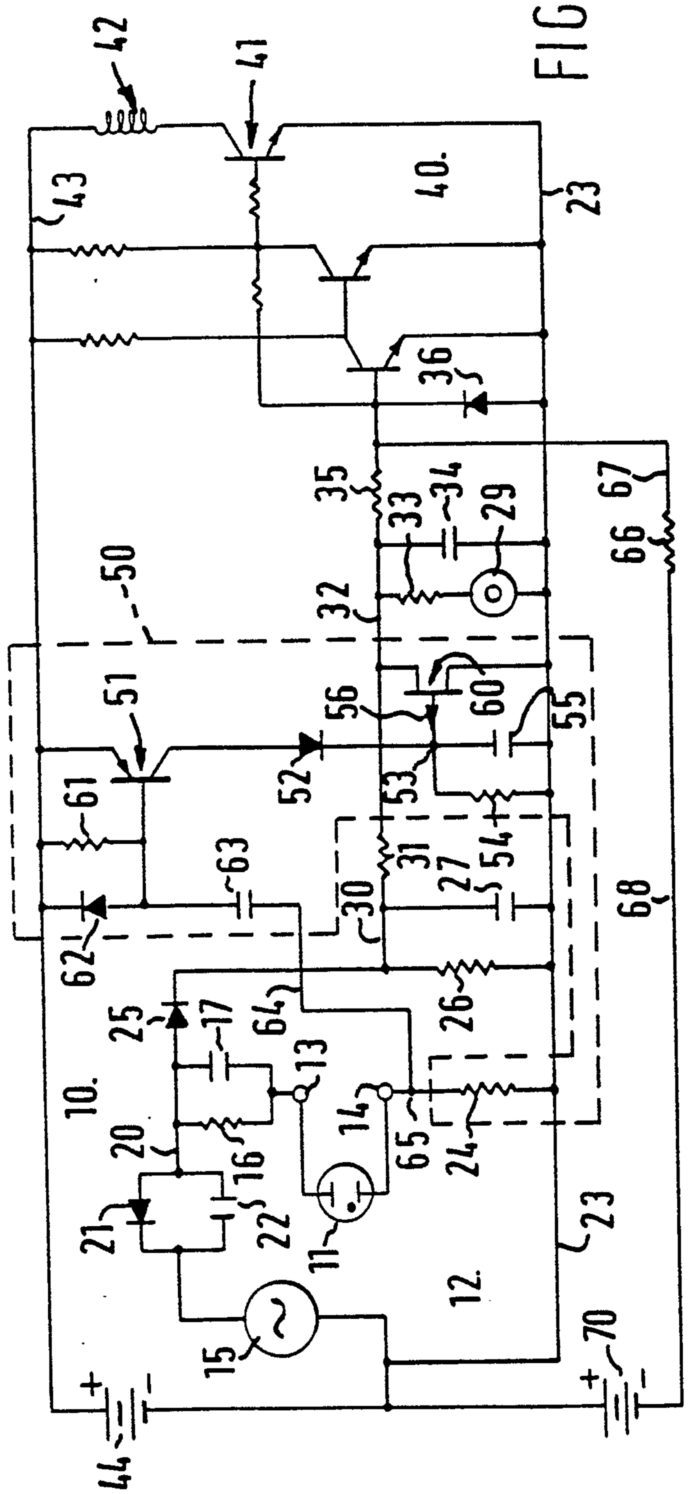

FIG.1

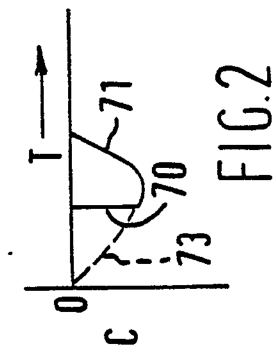

FIG.2

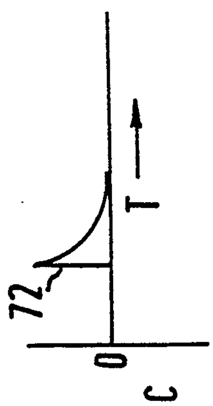

FIG.3